# EUROPEAN PATENT SPECIFICATION

(11) **EP 4 386 568 B1**
(45) Date of publication and mention of the grant of the patent: **09.04.2025**
(21) Application number: 23183791.5
(22) Date of filing: 06.07.2023
(51) Int. Cl.: G06F 12/0868, G06F 3/06, H04L 67/1097, H04L 67/568

(54) **COMPUTATIONAL NETWORK INTERFACE CARD WITH METADATA CACHING**
COMPUTERNETZWERKSCHNITTSTELLENKARTE MIT METADATEN-ZWISCHENSPEICHERUNG
CARTE D'INTERFACE DE RÉSEAU INFORMATIQUE AVEC MISE EN CACHE DE MÉTADONNÉES

(30) Priority: 13.12.2022 KR 20220173904
(43) Date of publication of application: 19.06.2024
(73) Proprietor: Samsung Electronics Co., Ltd., Suwon-si, Gyeonggi-do 16677 (KR); Korea Advanced Institute of Science and Technology, Daejeon 34141 (KR)
(72) Inventor: Park, Sungjoon, Suwon-si, Gyeonggi-do 16678 (KR); Kwon, Youngjin, Daejeon 34141 (KR); Koo, Inhoe, Daejeon 34141 (KR); Kim, Jongyul, Daejeon 34141 (KR); Oh, Jinyoung, Daejeon 34141 (KR); Hong, Young Jun, Suwon-si, Gyeonggi-do 16678 (KR)
(74) Representative: Grünecker Patent- und Rechtsanwälte PartG mbB

(56) References cited:
- EP-A1- 3 992 804
- US-A1- 2022 100 687

## Description

### BACKGROUND

### 1. Field

The following description relates to a computational network interface card (NIC) with metadata caching.

### 2. Description of Related Art

A network interface card (NIC) is a hardware device used to connect a computer to a network to communicate. A NIC may also be referred to as a network interface controller, a local area network (LAN) card, a physical network interface, a network adapter, a network card, and an Ethernet card.

A NIC transmits data stored in a memory or cache to outside of the NIC. That is, a NIC may include a cache that serves as a buffer for storing information generated during the transmission/reception of data (e.g., during signal conversion).
US 2022/100687 A1 refers to remote sharing of directly connected storage. A host system may include a computational processing unit implemented using hardware and a hardware virtualizing and remote sharing, HVRS, server that virtualizes and shares the computational processing unit with other host systems, where the host system is directly connected to an internal fabric of a storage system. A storage system interface, SSI, of the host system may be directly connected to the internal fabric of the storage system and is also directly connected to a same peripheral device interconnect as the CPU, the computational processing unit and/or other hardware resources of the host system. The SSI may communicate with storage resources of the storage system using remote direct memory access, RDMA, and zero-copy technologies. Such a host system may provide the storage capacity and data protection services of a storage system at relatively fast speeds e.g., comparable to non-volatile RAM on a host system configured for use as persistent memory.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is claimed in the independent claims. Preferred embodiments are specified in the dependent claims.

In one general aspect, a computational network interface card (NIC) sharing a storage space with a memory expander thereof includes: a NIC memory including instructions; a NIC processor including a cache and electrically connected to the NIC memory; and a NIC configured to transmit data stored in the NIC memory or the cache to a network, wherein, the instructions are configured to cause the NIC processor to perform operations including: receiving a request to read or write metadata; and checking whether the requested metadata is stored in a local metadata cache of the computational NIC by sequentially checking whether the metadata is stored in the cache of the NIC processor, a cache of the NIC, the NIC memory, or the memory expander.

The metadata are metadata used in a distributed file system and a client device including the computation NIC participates in the distributed file system.

The NIC may be a compute express link (CXL)-NIC that supports CXL.cache as defined in a CXL protocol.

The memory expander is a CXL memory expander that supports CXL.mem as defined in a CXL protocol.

The computation NIC may be a type 1, type 2, or type 3 device as defined in a CXL protocol.

The NIC and the NIC processor may be connected in series, and a client device including the computational NIC may access the metadata via the NIC processor.

The NIC and the NIC processor may be connected in parallel, and a client device including the computational NIC may access the metadata without passing through the NIC processor.

The operations further include: when the requested metadata is determined to be stored in the local metadata cache, verifying validity of the cached metadata; or when the requested metadata is determined to not be stored in the local metadata cache, requesting a metadata server for a metadata management permission of the requested metadata.

The verifying of the validity may include: verifying a validity period of the stored metadata; and verifying whether the computational NIC holds a permission corresponding to the metadata work permission.

In a general aspect, an electronic device includes: a memory including instructions; a processor electrically connected to the memory and configured to execute the instructions; and a computational network interface card (NIC) configured to manage distributed filesystem (DFS) metadata work permissions for DFS metadata in a local distributed file system (DFS) metadata cache of the computational NIC, wherein the DFS metadata is metadata for a DFS, wherein the instructions are configured to cause the processor and/or the computational NIC to perform operations including: requesting, to the computational NIC, by the processor, metadata work permission for a piece of DFS metadata required by a first process executing on the processor; based on determining that the computational NIC does not have metadata management permission for the piece of DFS metadata, requesting, by the computational NIC, to a metadata server of the DFS, metadata management permission for the piece of DFS metadata; and obtaining, by the computational NIC, from the metadata server, metadata management permission for the piece of DFS metadata, and based thereon, assigning metadata work permission to the first process.

The metadata work permission may be a metadata read permission or a metadata write permission, and the metadata management permission from the metadata server grants permission to assign DFS metadata read permission or write permission to the process executed by the processor.

The metadata server may be configured to manage the metadata work permission for all metadata of at least a portion of the DFS, and the computational NIC may be configured to be entrusted, by the metadata server, with metadata management permission for at least some of the DFS metadata in the local DFS metadata cache.

The computational NIC may be configured to: based on obtained metadata management permission, assign the metadata read permission to both the first process and a second process executing on the processor.

When another electronic device different from the electronic device obtains the metadata write permission for the piece of DFS metadata, the metadata work permission for the piece of DFS metadata may be surrendered by the electronic device.

The computational NIC may include: a NIC memory including instructions; a NIC processor including a cache and electrically connected to the NIC memory; and a NIC configured to transmit data stored in the NIC memory or the cache to a network connected to the NIC.

In another general aspect, a memory expander supports CXL.mem as defined in a compute express link (CXL) protocol, the memory expander includes: a memory device in which pieces of DFS metadata of a DFS are stored; and a controller configured to control the memory device, wherein the controller is configured to: receive a work request for an operation on one of the pieces of metadata from an electronic device including a computational network interface card (NIC) connected with the memory expander; and in response to the work request, perform at least one operation on one of the pieces of DFS metadata stored in the memory device.

The controller may be further configured to: communicate directly with the computational NIC or the electronic device through a CXL interface.

The computational NIC may be a type 2 or type 3 device as defined in the CXL protocol, and includes a NIC memory supporting CXL.mem as defined in the CXL protocol.

The computational NIC is further configured to: assign, to a process executed by the electronic device, a metadata work permission to work on a piece of DFS metadata, wherein the memory expander may be configured to: receive the work request from the electronic device executing the process.

The controller may be further configured to: receive, from the electronic device, a metadata read request for reading the one of the pieces of DFS metadata; and in response to the metadata read request, transmit the one of the pieces of DFS metadata to the electronic device.

The controller may be further configured to: receive, from the electronic device, a metadata write request for writing the one of the pieces of DFS metadata and associated result data; and in response to the metadata write request, change the one of the pieces of DFS metadata to the result data and store the result data.

The pieces of DFS metadata are metadata may be used for accessing filesystem objects in a distributed file system.

Other features and aspects will be apparent from the following detailed description, the drawings, and the claims.

### BRIEF DESCRIPTION OF THE DRAWINGS

FIGS. 1A and 1B illustrate an example structure and operation of a distributed file system according to one or more embodiments.
FIG. 2 illustrates an example electronic device (e.g., a client device) according to one or more example embodiments.
FIG. 3 illustrates a computational network interface card (NIC) according to one or more embodiments.
FIG. 4 illustrates an example compute express link (CXL) device included in an electronic device according to one or more example embodiments.
FIG. 5 illustrates an example of an electronic device including a CXL device, according to one or more embodiments.
FIGS. 6A through 6C illustrate examples of connection structures of types of computational NICs according to one or more example embodiments.
FIGS. 7A and 7B illustrate examples of structure of a type 2 computational NICs according to one or more example embodiments.
FIG. 8 illustrates an example operation of a metadata server and an electronic device according to one or more example embodiments.
FIG. 9 illustrates operations performed by an electronic device according to one or more embodiments.
FIG. 10 illustrates operations performed by a computational NIC according to one or more embodiments.
FIG. 11 illustrates example operations performed by a computational NIC according to one or more example embodiments.
FIG. 12 illustrates a simulated latency in a distributed file system.
FIG. 13 illustrates a performance graph of distributed file systems for a single client.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

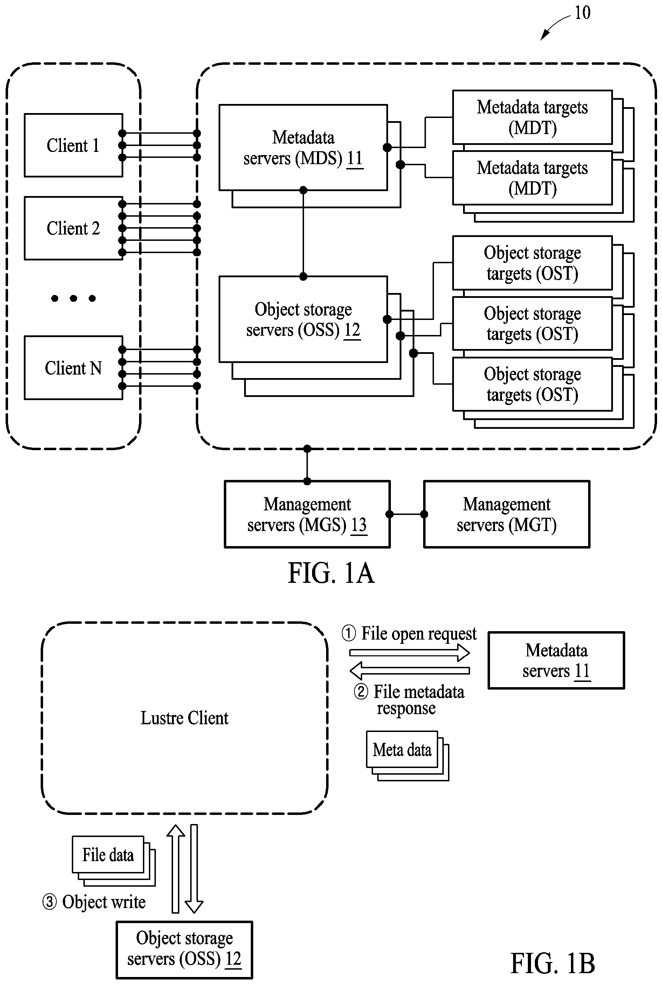

FIGS. 1 and 1B illustrate example structure and operation of a distributed file system, according to one or more embodiments.

A high-performance computing system may include multiple computer system nodes connected in parallel to perform billions of operations per second. For such a high-performance computing system, a distributed file system 10 in which multiple computer system nodes are connected through a parallel input/output (I/O) path may be used. Clients and servers of the high-performance computing system may be equipped with NICs for network communication, and NICs may be connected to each other through a high-performance network for a data center, for example, and Infiniband or high bandwidth Ethernet network. The distributed file system 10 may provide high-speed access to extremely large and/or numerous file data to support high-performance computing as used, for example, in weather modeling and seismic prospecting. However, the distributed file system 10 is not limited to use with high-performance applications. In some implementations, the distributed file system 10 may be a variation of a Lustre distributed file system.

Referring to FIG. 1A, the distributed file system 10 may include metadata servers 11 for managing metadata of the distributed file system 10 and object storage servers 12 for storing file data of the distributed file system 10 (e.g., filesystem objects such as file objects, directory objects, or the like). The metadata describes file data/objects such as namespace data, locations of file system objects, permission data, etc. The distributed file system 10 may be scalable and performance may be improved by the separation of an I/O path of the file data and an I/O path of the metadata (in other words, by allowing data and metadata to be separately accessed). In the distributed file system 10, client devices (e.g., clients 1 to N), the metadata servers 11, and/or the object storage servers 12 may transmit and/or receive data (e.g., the file data and the metadata) while communicating with each other through a network. The metadata referred to herein is distributed file system (DFS) metadata.

The metadata servers 11 may include metadata targets in which the metadata is stored. The object storage servers 12 may include object storage targets in which file data is stored. Management servers 13 may manage the metadata servers 11 and the object storage servers 12. The management servers 13 may include a management target (MGT) in which data associated with management of the metadata servers 11 and the object storage servers 12 is stored.

Referring to FIG. 1B, a client device accessing the distributed file system 10 may (1) request metadata (e.g., metadata describing file data to be used, e.g. a file open request specifying a namespace filepath) from a metadata server 11 to use file data. A client device may then (2) obtain, from the metadata server 11, a piece of metadata such as position information (e.g., block information) indicating a position where the file data is stored in the distributed file system 10 (or other information about the file data). The client device may, according to the obtained metadata, access the object storage server 12 where a block is positioned and (3) read/write data (e.g., the file data) from/to the block.

While the performance of distributed file systems such as the example distributed file system 10 can be improved through the increased performance of object storage servers 12, most operations on file data in previous distributed file systems generally involve corresponding accesses to the metadata server 11 (e.g., access to a metadata server by a client device). Even if the performance of object storage servers 12 is increased, there may be bottlenecks caused by the need to access the metadata servers 11 (generally, for each file request). The performance of the metadata servers 11 may be increased to, for example, meet service level agreements (SLAs) when client devices create overload (e.g., burst demand) to the distributed file system 10. The performance improvement of the metadata server 11 may be partly addressed through server expansion (adding servers), but server expansion requires additional cost for server installation and maintenance/repair, and often, such additional resources for demand spikes go under-utilized at other times.

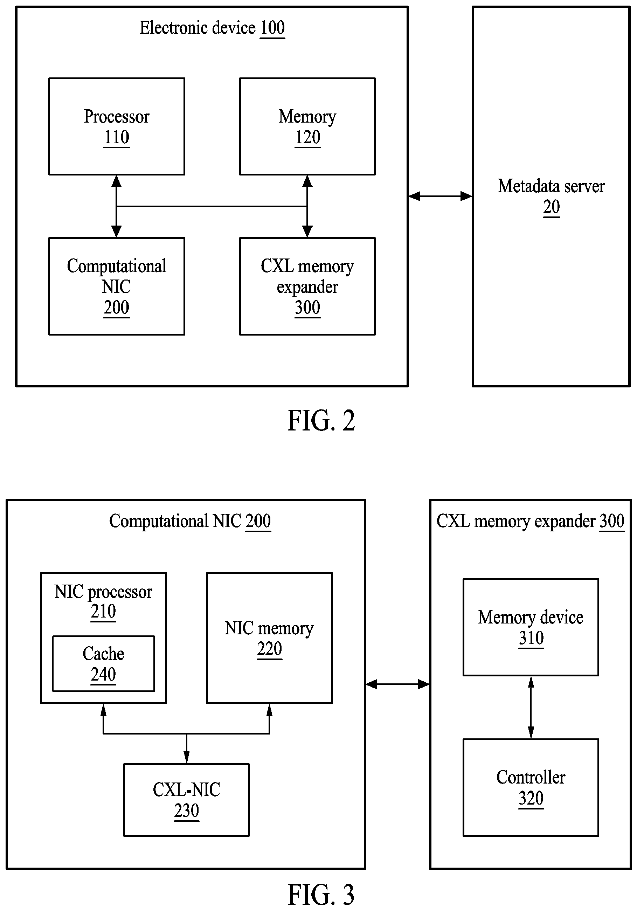

FIG. 2 illustrates an example electronic device (e.g., a client device) according to one or more example embodiments. The example electronic device may be a client participating in (or accessing) the distributed file system 10.

An electronic device 100 (e.g., a client device) may use local metadata caching to reduce latency of its distributed file system (DFS) requests (such latency that would be incurred by accessing the metadata servers 20) by instead accessing locally cached metadata for DFS requests, which may also reduce load on the metadata servers 20.

The electronic device 100 may provide locally cached DFS metadata through the use of a computational network interface card (NIC) 200 and possibly other components, such as, for example a compute express link (CXL) memory expander 300. The computational NIC 200 may also be referred to as a computational network interface controller or a smart NIC. The electronic device 100 may increase its local metadata caching capacity by using memory of the CXL memory expander 300 and/or the computational NIC 200 for its local metadata cache.

The electronic device 100 may be connected to the metadata server 20 through a network (e.g., an InfiniBand network). In the electronic device 100, the computational NIC 200 may manage local permissions for its locally cached metadata, for example, permission for local processes to work on (modify, access, etc.) the locally cached metadata. The computational NIC 200 may manage the permissions for the cached metadata in a local storage area, and the metadata server 20 may manage the permissions for metadata in a global area/scope. Accordingly, data coherency (or integrity) of the metadata may be maintained efficiently.

As noted, the electronic device 100 may function as a client device in a distributed file system. The electronic device 100 may be a personal computer (PC), a portable device, an application server, or a storage server, to name some examples. A portable device may be implemented as, for example, a laptop computer, a mobile phone, a smartphone, a tablet PC, a mobile Internet device (MID), a personal digital assistant (PDA), an enterprise digital assistant (EDA), a digital still camera, a digital video camera, a portable multimedia player (PMP), a personal (or portable) navigation device (PND), a handheld game console, an e-book, or a smart device. A smart device may be implemented as, for example, a smartwatch, a smart band, or a smart ring.

Still referring to FIG. 2, the electronic device 100 may include a processor 110, a memory 120, and the computational NIC 200. The electronic device 100 may further include the CXL memory expander 300 (see FIG. 3).

The processor 110 may process data stored in the memory 120. The processor 110 may execute a computer-readable code (e.g., software) stored in the memory 120 and instructions triggered by the processor 110. The processor 110 may execute an operating system kernel that manages resources of the electronic device 100. Processes/threads managed by the operating system kernel may execute on the processor 110 and may make requests to access resources (e.g., file system objects) of the distributed file system 10. Metadata may be requested directly or indirectly as a result (e.g. by a DFS module) of requesting file system objects.

The processor 110 may be a hardware-implemented data processing device with a physically structured circuit to execute desired operations. The desired operations may include, for example, code or instructions included in a program. The hardware-implemented data processing device may include, for example, a microprocessor, a central processing unit (CPU), a processor core, a multi-core processor, a multiprocessor, an application-specific integrated circuit (ASIC), a field-programmable gate array (FPGA), or combinations thereof.

The memory 120 may be implemented as a volatile memory device or a non-volatile memory device. A volatile memory device may be implemented as, for example, a dynamic random-access memory (DRAM), a static RAM (SRAM), a thyristor RAM (T-RAM), a zero capacitor RAM (Z-RAM), or a twin transistor RAM (TTRAM). A non-volatile memory device may be implemented as, for example, an electrically erasable programmable read-only memory (EEPROM), a flash memory, a magnetic RAM (MRAM), a spin-transfer torque MRAM (STT-MRAM), a conductive bridging RAM (CBRAM), a ferroelectric RAM (FeRAM), a phase change RAM (PRAM), a resistive RAM (RRAM), a nanotube RRAM, a polymer RAM (PoRAM), a nano floating gate Memory (NFGM), a holographic memory, a molecular electronic memory device, or an insulator resistance change memory.

The computational NIC 200 may also be referred to as a smart NIC or a data processing unit. The computational NIC 200 have one or more processors that may perform functions throughout the network stack (even as high as the application layer, depending on implementation). The computational NIC 200 may be configured for offloading network processing from the processor 110 (a host processor) to a processor of the computational NIC 200 (although such use is not required). The computational NIC 200 may perform an operation (e.g., managing metadata) through a processor thereof (e.g., a NIC processor 210 of FIG. 3). The computational NIC 200 may cache DFS metadata and may perform cache management functionality. That is, the computational NIC 200 may store (or partly store) and manage locally cached DFS metadata.

The CXL memory expander 300 may be configured in a similar form to that of a solid-state drive (SSD) and may be an external storage device. The CXL memory expander 300 may be provided at a position where an SSD is provided and may contribute to the expansion of DRAM capacity. The CXL memory expander 300 may be used for caching DFS metadata. The computational NIC 200 and the CXL memory expander 300 are described with reference to FIG. 3.

FIG. 3 illustrates a computational NIC according to one or more example embodiments.

A computational NIC 200 may provide a connection (e.g., to another client device and/or a server) for an electronic device (e.g., the electronic device 100 of FIG. 2) through a network (e.g., a local area network (LAN)). The computational NIC 200 may access a CXL memory expander 300 to access cached DFS metadata requested by the electronic device 100 or to store DFS metadata acquired from a metadata server.

Referring to FIG. 3, the computational NIC 200 includes a NIC processor 210, a NIC memory 220, and a CXL-NIC 230 (a NIC portion of the computational NIC 200).

The NIC processor 210 may be configured as a CPU that consumes relatively low power, for example, an FPGA or a reduced instruction set computer (RISC) microprocessor. The NIC processor 210 may manage DFS metadata cached in the NIC memory 220, the CXL-NIC 230, a cache 240, and/or the CXL memory expander 300. To avoid the latency time of accessing a metadata server (e.g., the metadata server 20) with a small cost, the NIC processor 210 may be configured to manage local caching of DFS metadata (in some implementations, for improved performance, the NIC processor 210 may be reserved for only/primarily managing local DFS caching).

The NIC memory 220, the CXL-NIC 230, the cache 240, and/or the CXL memory expander 300 may function as a locale cache for storing DFS metadata.

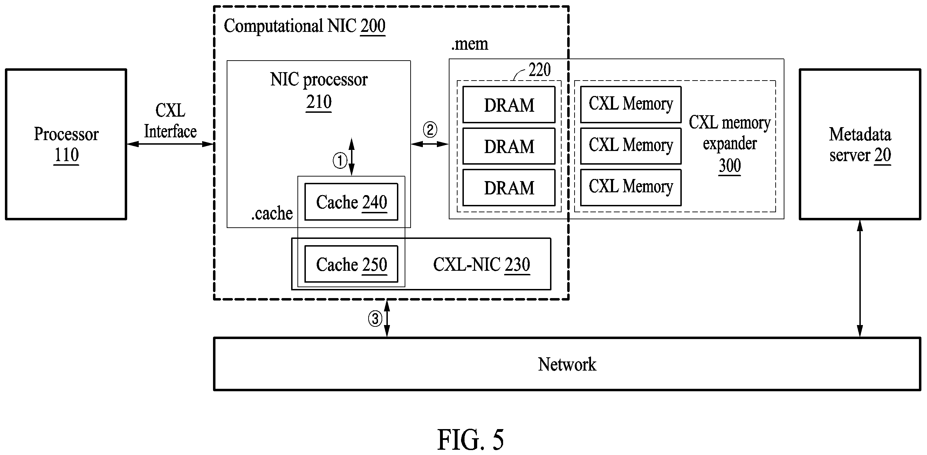

The CXL-NIC 230 may support CXL.cache as defined in a CXL protocol. The CXL-NIC 230 may be a type 1 device as defined in a CXL protocol. The CXL-NIC 230 may include a cache (e.g., a cache 250 of FIG. 5). The cache 250 of the CXL-NIC 230 may store DFS metadata.

The cache 240 may be a memory that serves as an intermediate buffer to improve the speed of communication between the NIC memory 220 and the NIC processor 210 (e.g., Level-1 cache). The cache 240 may have a faster data processing/access speed than the NIC memory 220. The NIC processor 210 may perform fast processing of DFS requests by storing and accessing, in the cache 240, some of data (e.g., DFS metadata) stored in the NIC memory 220.

The CXL memory expander 300 supports CXL.mem as defined in a CXL protocol. The CXL memory expander 300 may be a type 3 device as defined in a CXL protocol. The CXL memory expander 300 may be directly connected to the electronic device 100 and the computational NIC 200 through a CXL interface.

The CXL memory expander 300 may include a memory device 310 and a controller 320.

The memory device 310 may store data (e.g., DFS metadata). The controller 320 may control writing of data (e.g., DFS metadata) in the memory device 310 and reading of data (e.g., DFS metadata) stored in the memory device 310.

The controller 320 may receive a DFS metadata work/operation request which is a request for working/operating on metadata; the request may come from the electronic device 100 including the computational NIC 200. The computational NIC 200 may assign, to a process on the electronic device 100 (e.g., an operating system process), a metadata work permission for working on local DFS metadata. The controller 320 may receive the metadata work request from the process. The metadata described herein may be DFS metadata used in a distributed file system and the metadata work request may be a read or write request.

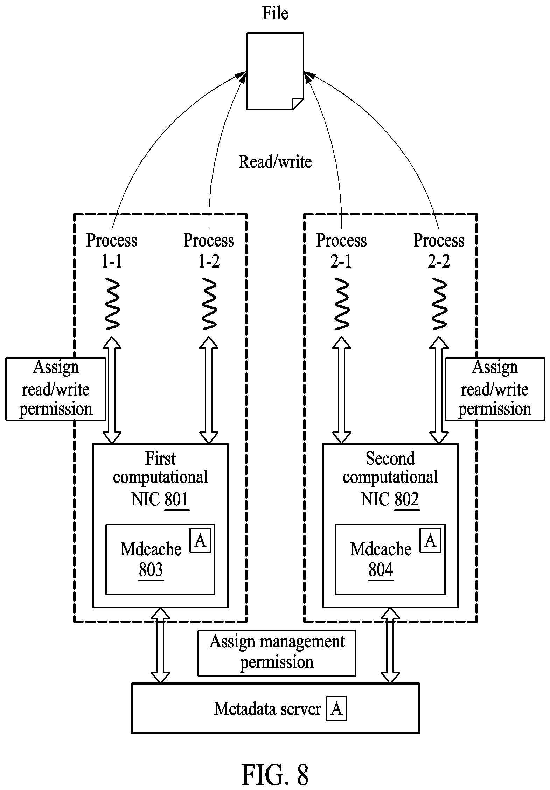

In response to the received work request, the controller 320 may perform a corresponding operation on the DFS metadata. For example, in response to the read request for metadata, the controller 320 may transmit the metadata corresponding to the read request to the electronic device 100 (e.g., based on the electronic device or its process having a metadata read permission). For example, in response to a metadata write request, the controller 320 may change/update/store DFS metadata included with the request and store the DFS metadata. Writing DFS metadata to a local cache may affect cache coherency. Operations for maintaining the coherency of metadata stored in the CXL memory expander 300 (or another local memory) are described with reference to FIG. 8.

The CXL memory expander 300 may expand storage space of the computational NIC 200, and by extension, the electronic device 100. The electronic device 100 including the CXL memory expander 300 may simultaneously use a storage space of a host memory (e.g., the memory 120 of FIG. 2) and a storage space of the CXL memory expander 300. The electronic device 100 may use the CXL memory expander 300 to cache DFS metadata and thereby reduce the latency of local DFS requests of the electronic device 100 and increase throughput of local DFS requests.

In addition, caching DFS metadata in the CXL memory expander 300 may facilitate the electronic device 100 accessing the metadata using the CXL memory expander 300. In addition, using the metadata stored in the CXL memory expander 300 may reduce the load on the metadata servers 20, particularly if many clients are configured for local caching of metadata.

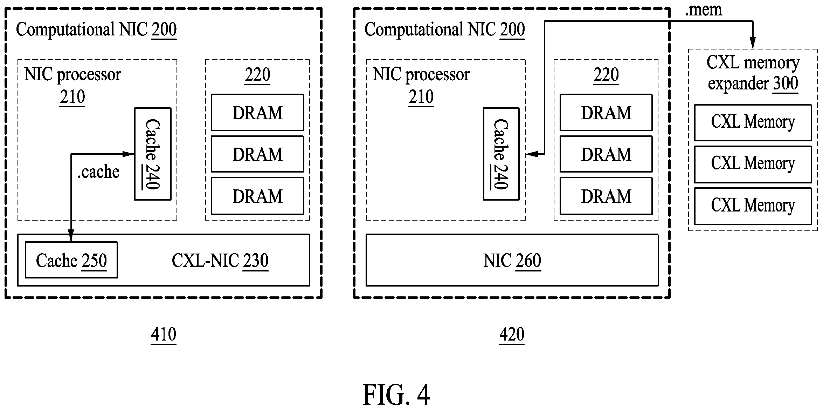

The computational NIC 200 (that is handling local DFS requests and providing local metadata caching) may provide an immediate response to a DFS request of the electronic device 100 (e.g., a request relating to or requiring DFS metadata). When receiving a request relating to metadata (e.g., a metadata work request or a file request), the computational NIC 200 may sequentially check its local cache storage: whether the metadata is stored in (i) the cache 240, (ii) a cache of the CXL-NIC 230 (e.g., a cache 250 of FIG. 4), (iii) the NIC memory 220, or (iv) in the CXL memory expander 300 (other combinations of local storage and other checking orders may be used). When the metadata is found in the local cache storage, the computational NIC 200 may provide an immediate response to the electronic device 100 without communicating with a metadata server 20. Not all four types of local storage may be used for local metadata caching; any one, or any combination of the types of local storage may be used.

When metadata requested by the electronic device 100 is determined to be stored (available) in the local DFS metadata cache (e.g., any one or more of cache 240, the cache 250 of the CXL-NIC 230, the NIC memory 220, or the CXL memory expander 300), such a case may be referred to as a "cache hit." When metadata requested by the electronic device 100 is not stored in the local DFS metadata cache, such a case may be referred to as a "cache miss."

To increase a cache hit probability of the computational NIC 200, storage capacity of the local metadata cache may be increased. To do so, the computational NIC 200 may use a CXL device (e.g., the CXL-NIC 230 or the CXL memory expander 300) supporting the CXL protocol. CXL devices are described next.

FIG. 4 illustrates an example CXL device included in an electronic device according to one or more example embodiments, and FIG. 5 illustrates an example electronic device including a CXL device (e.g., the CXL device in FIG. 4), according to one or more example embodiments.

A CXL device that supports a CXL protocol (CXL.cache, CXL.mem, and CXL,io) may be classified as type 1, type 2, or type 3 device according to a supported type of the CXL protocol. A CXL device that supports CXL.cache through a CXL interface may be a type 1 device. A CXL device that supports CXL.mem through the CXL interface may be a type 3 device. A CXL device that supports both CXL.cache and CXL.mem through the CXL interface may be a type 2 device.

Referring to the first example 410 of FIG. 4, the computational NIC 200 may use the CXL-NIC 230. The CXL-NIC 230 may support CXL.cache as defined in a CXL protocol (multiple versions of the CXL protocol specify CXL.cache, and any such version may be used/supported). The computational NIC 200 may also support CXL.cache. The computational NIC 200 may share the cache 250 of the CXL-NIC 230 supporting the same CXL protocol. The computational NIC 200 may simultaneously use the cache 240 and the cache 250 of the CXL-NIC 230, which may allow the cache capacity of the computational NIC 200 to be increased. The computational NIC 200 may be a type 1 or type 2 device as defined in the CXL protocol.

Referring to the second example 420 of FIG. 4, the computational NIC 200 may use the CXL memory expander 300. The CXL memory expander 300 may support CXL.mem as defined in a CXL protocol. The computational NIC 200 may also support CXL.mem. The computational NIC 200 may use the CXL memory expander 300 supporting the same CXL protocol. The memory capacity of the computational NIC 200 may be increased. Although the NIC memory 220 is illustrated as including a DRAM in FIG. 4, the implementation thereof is not limited to the DRAM. The computational NIC 200 may be a type 2 or type 3 device as defined in the CXL protocol.

Referring to FIG. 5, the computational NIC 200 may be configured to simultaneously use the CXL-NIC 230 and the CXL memory expander 300 (i.e., a combination of the first and second examples 410, 420). The computational NIC 200 may include the CXL-NIC 230. The computational NIC 200 may share a storage space with the CXL memory expander 300.

The computational NIC 200 may simultaneously support CXL.mem and CXL.cache as defined in a CXL protocol. The computational NIC 200 may be a type 2 device as defined in the CXL protocol.

The computational NIC 200 may receive a request (e.g., a host request) for metadata from the processor 110 through the CXL interface. Alternatively, the computation NIC 200 may receive a file/object request and may itself generate a corresponding request for DFS metadata. The computational NIC 200 may check whether the DFS metadata is locally cached.

When the metadata is locally cached, the computational NIC 200 may respond quickly to the request of the processor 110 by bypassing accessing a metadata server 20. The computational NIC 200 may first check whether the metadata is stored (e.g., cached) in a cache type of memory (e.g., the cache 240 or the cache 250) because the cache type of memory (e.g., cache 240 and 250) may have a faster data processing speed than other memory included in the local DFS metadata cache (e.g., the NIC memory 220 and the CXL memory expander 300). When the metadata is determined to be not stored in the cache/fast type of memory of the local DFS metadata cache (e.g., cache 240 and 250), the computational NIC 200 may check whether the requested/needed DFS metadata is stored in the ordinary/slower memory of the local DFS metadata cache (e.g., the NIC memory 220 or the CXL memory expander 300).

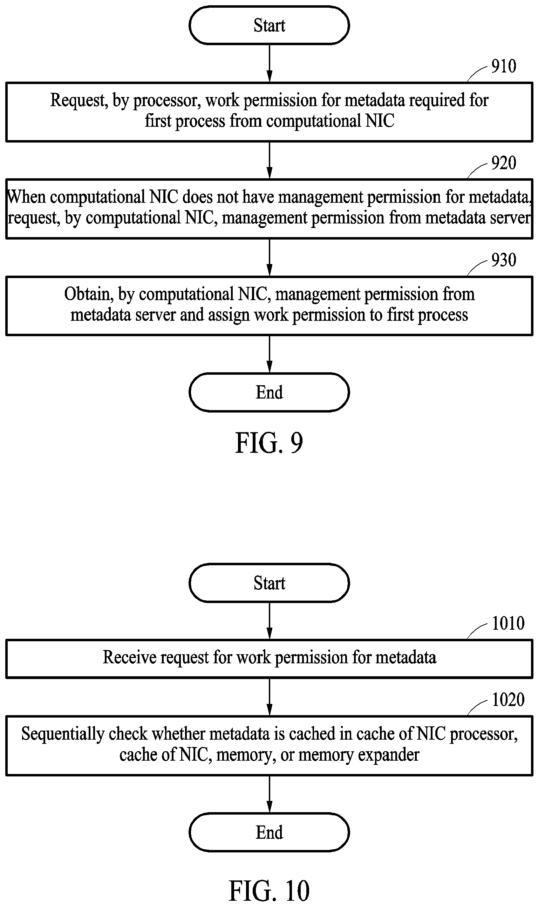

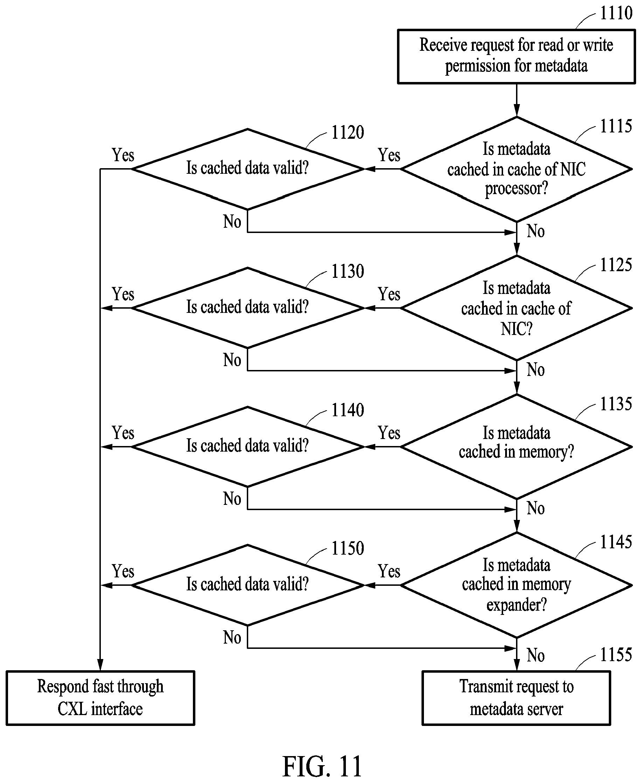

When the requested DFS metadata is determined to be not stored in the local DFS metadata cache, the computational NIC 200 may respond to the request of the processor 110 by accessing the metadata server 20. Operations performed by the computational NIC 200 are described with reference to FIGS. 10 and 11.

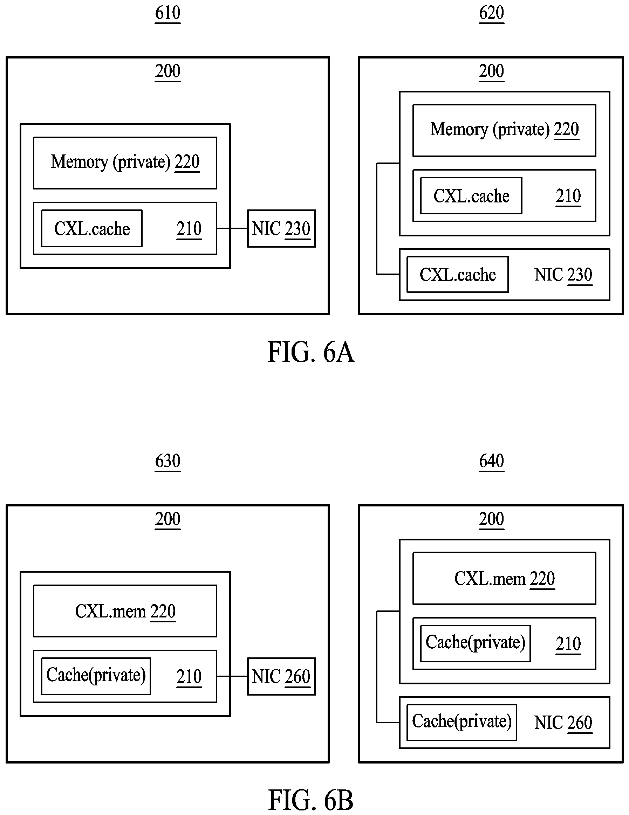

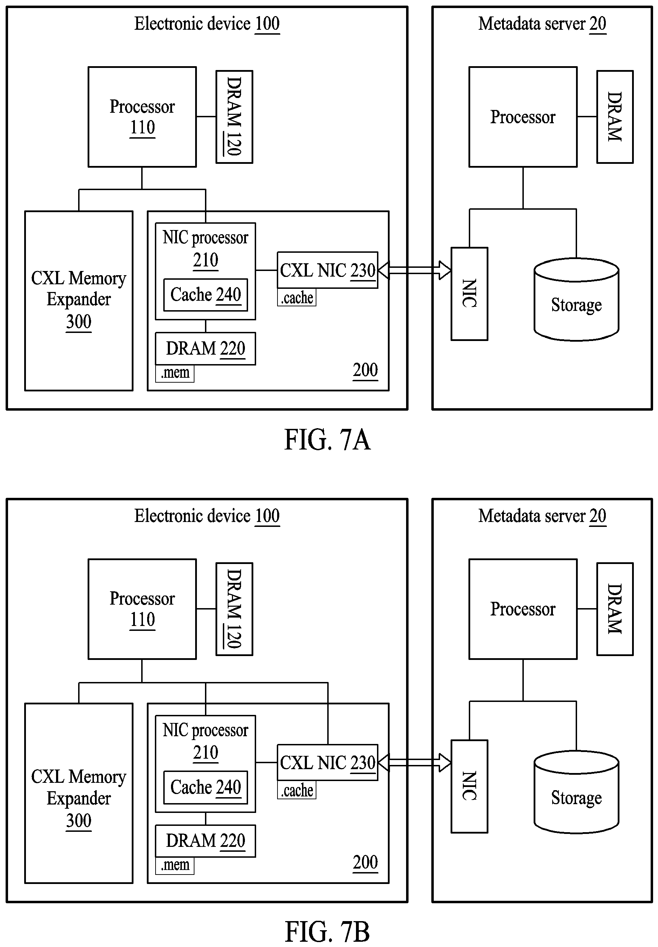

FIGS. 6A through 6C illustrate examples of connection structure for types of computational NICs according to one or more example embodiments, and FIGS. 7A and 7B illustrate examples of a structure of a type 2 computational NIC according to one or more example embodiments.

The computational NIC 200 may be arranged with a serial or parallel connection structure according to a type of connection between the NIC processor 210 and a NIC (e.g., the CXL-NIC 230 or a NIC 260). According to the type of connection between the NIC processor 210 and the NIC (e.g., the CXL-NIC 230 or the NIC 260), a path through which a client device (e.g., the electronic device 100 of FIG. 2) accesses local metadata may differ.

As described below, a structure of the computational NIC 200 may have any of six types of structures (or others). Although the structure of a computational NIC 200 may be classified in further detail according to the characteristics (e.g., privately owned and coherence) between a cache included in the NIC processor 210 and a cache included in the NIC (e.g., the CXL-NIC 230 or the NIC 260), such other features are not considered herein for classification. Accordingly, the structure of the computational NIC 200 is not limited to the examples of FIGS. 6A through 6C.

Referring to the first example 610 shown in FIG. 6A, a serial structure of a type computational NIC 200 as defined in a CXL protocol. The computational NIC 200 may support CXL.cache and may not support CXL.mem. The CXL-NIC 230 and the NIC processor 210 may be connected in series, and a client device including the computational NIC 200 may access cached DFS metadata via the NIC processor 210.

Referring to the second example 620 of FIG. 6A, illustrated is a parallel structure of a type 1 computational NIC 200 as defined in a CXL protocol. The computational NIC 200 may support CXL.cache and may not support CXL.mem. The CXL-NIC 230 and the NIC processor 210 may be connected in parallel, and a client device including the computational NIC 200 may access cached DFS metadata therein without passing through the NIC processor 210.

Referring to the third example 630 of FIG. 6B, illustrated is a serial structure of a type 3 computational NIC 200 as defined in a CXL protocol. The computational NIC 200 may not support CXL.cache but may support CXL.mem. The NIC 260 and the NIC processor 210 may be connected in series, and a client device including the computational NIC 200 may access DFS metadata cached therein via the NIC processor 210.

Referring to the fourth example 640 of FIG. 6B, illustrated is a parallel structure of a type 3 computational NIC 200 as defined in a CXL protocol. The computational NIC 200 may not support CXL.cache but may support CXL.mem. The NIC 260 and the NIC processor 210 may be connected in parallel, and a client device (e.g., a host process) including the computational NIC 200 may access locally cached DFS metadata without passing through the NIC processor 210.

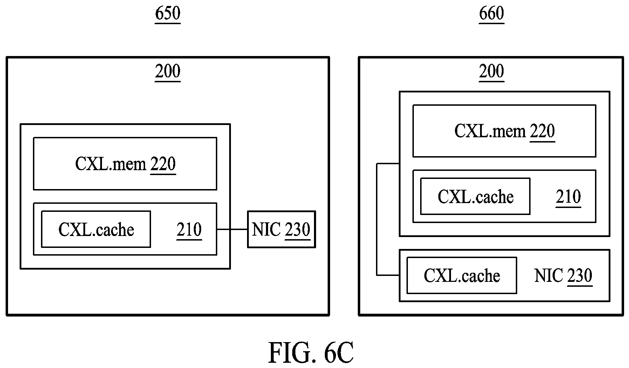

Referring to the fifth example 650 of FIG. 6C and FIG. 7A, illustrated is a serial structure of a type 2 computational NIC 200 as defined in a CXL protocol. The computational NIC 200 may support both CXL.cache and CXL.mem. The CXL-NIC 230 and the NIC processor 210 may be connected in series, and a client device including the computational NIC 200 may access locally cached DFS metadata via the NIC processor 210.

Referring to the sixth example 660 of FIG. 6C and FIG. 7B, illustrated is a parallel structure of a type 3 computational NIC 200 as defined in a CXL protocol. The computational NIC 200 may support both CXL.cache and CXL.mem. The CXL-NIC 230 and the NIC processor 210 may be connected in parallel, and a client device including the computational NIC 200 may access locally cached DFS metadata without passing through the NIC processor 210.

When a device (e.g., the electronic device 100 of FIG. 2 or the metadata server 20 of FIG. 2) or a system (e.g., a distributed file system) supports the CXL.cache protocol, a local cache-type memory area may be used more readily for local caching of DFS metadata. When a device (e.g., the electronic device 100 or the metadata server 20) or a system (e.g., the distributed file system) supports the CXL.mem protocol, DFS metadata caching by memory sharing may be facilitated. Since cache coherency may be guaranteed through the CXL.cache protocol, performing shared memory access in a situation where cache coherency is guaranteed may reduce software overhead associated with cache coherency (i.e., there may be less overhead to assure cache coherency). When a device (e.g., the electronic device 100 or the metadata server 20) or a system (e.g., the distributed file system) supports both CXL.cache and CXL.mem, shared memory access may be facilitated. Operations of the metadata server 20 and the electronic device 100 are now described in further detail.

FIG. 8 illustrates an example operation of a metadata server and an electronic device according to one or more example embodiments, and FIG. 9 illustrates an example flow of operations performed by an electronic device according to one or more example embodiments.

Referring to FIG. 8, a first computational NIC of a first electronic device 801 (first client) and a second computational NIC of a second electronic device 802 (second client) may manage work permissions for DFS metadata (e.g., metadata A). The first and second computational NICs may be implemented, e.g., as a computational NIC 200. The first computational NIC may manage metadata permissions with respect to metadata in its first local cache 803 (which may be a combination of cache-type memory and/or other memory, as described above), for threads or processes running on the first computational NIC (or its host/electronic device) that are using the DFS. The second computational NIC may manage metadata permissions with respect to metadata in its second local cache 804 (which may be a combination of cache-type memory and/or other memory), for threads or processes running on the first computational NIC (or its host/electronic device) that are using the DFS. A metadata server (e.g., a metadata server 20 of FIG. 2) may globally manage work permission for metadata with global scope. The computational NICs may manage work permission for metadata in respective local DFS cache storage. As described next, the metadata server and the computational NICs may thereby cooperatively manage metadata work permission by dividing it therebetween as described above, and coherency (integrity) of the metadata may thus be efficiently maintained. Note that although permission/authority is discussed with respect to metadata, permission may also be with respect to files in the DFS; the practical effect is the same, in that permission of metadata is managed, whether directly or indirectly. Where mention is made of metadata permission management, by extension, the same description applies to managing permissions of files or other DFS filesystem objects.

The metadata server may apply a mechanism for granting and revoking metadata management permissions for metadata (e.g., metadata A) to and from the computational NICs (e.g., NIC processor 1 of the first computational NIC and NIC processor 2 of the second computational NIC). Permission may be in the form of a transferrable security token. For example, when the metadata (e.g., metadata A) stored in the metadata server is stored (e.g., cached) in the first local cache 803 of the first computational NIC, the metadata server may transfer (e.g., assign) a token granting local management permission to the first computational NIC (security tokens may have lifespans and expire). While the local management permission obtained by the first computational NIC remains valid, the first electronic device 801 (e.g., a client device) including the first computational NIC may use its locally stored copy of the metadata (e.g., the cached metadata A) without accessing the metadata server.

As discussed next, the nature of the management permission can vary with the type of operation to be performed. In the case of writing, the metadata server may grant only one write-permission token to any of the clients for a piece of metadata (i.e., only one client has permission to locally update that piece of metadata, e.g., metadata A). The client holder of the write-permission token may have exclusive permission to update the corresponding piece of metadata in its local metadata cache. The write-permission token can be pulled back from the current client/holder (revoked) to the metadata server and then the token (or another) may be provided to another client when that other client needs write permission for the corresponding piece of metadata. In the case of reading, the metadata server may grant multiple read-permission tokens to respective clients for a piece of metadata (e.g., metadata A), and the clients with such tokens may manage local reading permission for the relevant metadata (e.g., metadata A) in their corresponding local metadata caches. When needed, e.g., to help maintain cache coherency in the case of a write, the metadata server may revoke any or all of the read-permission tokens. Write permission may be considered "complete" permission in that it also carries read permission. The metadata server(s) may track which tokens/permissions have been granted to which clients/electronic devices for which pieces of metadata, which may enable recall/revocation of same.

When the second electronic device 802 (e.g., a client device), for example, is to perform an update operation on (locally update) its local metadata (e.g., its copy of metadata A in the first local cache 803) for which the write-permission management is currently held by the first computational NIC per its possession of a corresponding write-permission token, the metadata server may revoke (e.g., deactivate) the write-management permission assigned to the first computational NIC by pulling back its write-permission token. The metadata server may then transfer (e.g., assign) the write-permission management for metadata A to the second computational NIC by sending it the same (or another) write-permission token for metadata A. Through this mechanism, data coherency (integrity) may be guaranteed in a situation where multiple electronic devices (e.g., the first and second electronic devices 801 and 802) are accessing the same metadata (e.g., metadata A). The metadata server may collectively manage, in this fashion, the work permission for all metadata in the global area. A computational NIC may be assigned (e.g., entrusted) with the local management permission for some of the metadata in its local DFS metadata cache area.

As noted, operations by a client on metadata may include reading and writing. As described next, parallel reading may be performed by a plurality of electronic devices (e.g., processes/threads of different clients) on one piece of metadata by allowing those electronic devices to each hold read-permission for that piece of metadata at the same time. As noted, writing may be performed by only allowing one electronic device (e.g., one process) at a time to hold write permission for a corresponding piece of metadata.

For example, the first electronic device 801 may request the first computational NIC for a read permission for metadata A required for process 1-1. Such request may be responsive to, or a part of, a request to read the file system object (e.g., a file) associated with metadata A. When the first computational NIC determines that it does not currently have read-permission for metadata A (e.g., permission to assign read permission for metadata A to local threads/processes), the first computational NIC may request the metadata server for read-permission management for metadata A and obtain the management permission (e.g., a read-permission token). The metadata server may make a record of the granted permission and provide the permission. The first computational NIC may then assign read permission for metadata A to its local process 1-1 (e.g., the first electronic device 801 performing process 1-1).

In a case in which the same metadata (e.g., metadata A) is requested when the first electronic device 801 is executing process 1-2 (i.e., when the first electronic device 801 is executing process 1-1 and process 1-2 simultaneously), the first electronic device 801 may request the first computational NIC for the read permission for metadata A required for process 1-2. The first computational NIC, having the read-permission management for metadata A (e.g., the permission to locally assign the read permission), may assign the read permission for metadata A to process 1-2 (e.g., the first electronic device 801 performing process 1-2) without communicating with the metadata server. The first electronic device 801 may simultaneously execute process 1-1 and process 1-2 and allow them to locally access metadata A, without requiring communication with the metadata server, which may thus reduce locking overhead.

In a case in which the same metadata (e.g., metadata A) is requested when the second electronic device 802 is executing process 2-1 (which may be executing in parallel with process 1-1, process 1-2, and process 2-1), the second electronic device 802 may request the second computational NIC for the read permission for metadata A required for process 2-1. The second computational NIC may determine that it does not hold read-permission for metadata A (e.g., permission to locally assign the read permission), and thus the second computational NIC may request the metadata server for read-permission for metadata A and obtain the read-permission (e.g., a read-permission token). The metadata server may make a record of the permission granted and provide the same. The second computational NIC may then assign the read permission for metadata A to process 2-1 (e.g., the second electronic device 802 performing process 2-1). As described above, reading may be performed simultaneously by multiple processes (executing on multiple electronic devices), whereas writing may be performed only by a single process (of a single electronic device) at a time. Note that in the case of a client/device holding write permission for a piece of metadata, that client/device may freely shift the write permission among its local processes (but only one such local process at a time is granted write permission). In addition, a client/device holding the exclusive write permission also has read permission.

In a case in which write permission for the same metadata (e.g., metadata A) is requested by the second electronic device 802 is executing process 2-2 (while process 1-1, process 1-2, and process 2-1 are also executing) , the second electronic device 802 may request the second computational NIC for the write permission for metadata A required for process 2-2. The second computational NIC may have only limited management permission (e.g., permission to locally assign only read permission), and thus the second computational NIC may request the metadata server for write-permission management (e.g., a permission to assign the write permission) for metadata A. The metadata server may revoke any previously granted management permissions to any other clients based on its recording of such previously granted permissions (e.g., the read permission assigned to the first computational NIC and the read permission assigned to the second computational NIC, or a previously granted write permission). The metadata server may assign, to the second computational NIC, write-permission management (e.g., a write-permission token granting permission to locally assign the read and/or write permission) for metadata A. The second computational NIC may then assign write permission for metadata A to process 2-2 (e.g., the second electronic device 802 performing process 2-2).

In a case in which the write permission for the same metadata (e.g., metadata A) is requested when the second electronic device 802 is executing process 2-1 (while process 2-2is executing), the second electronic device 802 may request the second computational NIC for write permission for metadata A required for process 2-1. In response, the second computational NIC may revoke the write permission previously assigned to process 2-2. The second computational NIC may then assign write permission for metadata A to process 2-1 (e.g., the second electronic device 802 executing process 2-1). As described above, since the work permission (e.g., the write permission) for metadata A is moved only internally/locally, communication with the metadata server may not be required, and locking overhead may thus be reduced.

Generally, when a read or write permission is revoked from a client/device by a metadata server, in response, that client/device's computational NIC will also revoke any corresponding read or write permission that has been granted to its local processes.

FIG. 9 illustrates operations performed by an electronic device according to one or more embodiments.

In operation 910, a processor (e.g., the processor 110 of FIG. 2) requests a computational NIC (e. g., the NIC 200 of FIG. 2) for a work permission for metadata required for a first process. The requested work permission may be a read permission or a write permission for the metadata.

In operation 920, when the computational NIC 200 determines that it does not currently management permission for the requested work permission for the metadata (e.g., the metadata required for the first process), the computational NIC 200 requests a metadata server (e.g., a metadata server 20 of FIG. 2) for the requested management permission. The management permission may be read-permission or write permission (which includes read permission), which is to be used for a process (e.g., the first process) executed by the processor 110.

In operation 930, the computational NIC 200 obtains the management permission (e.g., a read-permission token or a write-permission token) from the metadata server 20, and assign the work permission (e.g., the read and/or write permission for the metadata) to the first process (e.g., the processor 110 executing the first process).

The metadata server 20 may collectively manage work permission for all metadata in a global area (or a global namespace) of a DFS. The computational NIC 200 may be entrusted, by the metadata server 20, with a management permission for some of the metadata in the local DFS metadata cache of the computation NIC 200. As the metadata server 20 and the computational NIC 200 manage the work permission for metadata by dividing responsibility therebetween as described above, coherency (or integrity) of data (e.g., metadata) may be efficiently maintained. Hereinafter, operations internally performed in the computational NIC 200 will be described.

FIG. 10 illustrates a flow of operations performed by a computational NIC according to one or more example embodiments, and FIG. 11 illustrates an example flow of operations performed by a computational NIC according to one or more example embodiments.

In operation 1010, a NIC processor (e.g., the NIC processor 210 of FIG. 3) receives a request for a work permission for metadata. The metadata are metadata used in a distributed file system (e.g., a Lustre distributed file system) and may be requested in conjunction with a request directed to a file system object (e.g., a file, directory, etc.) associated with the metadata. The request for the work permission for the metadata may be received from an electronic device (e.g., the electronic device 100 of FIG. 2) including the NIC processor 210.

In operation 1020, depending on the composition of its local DFS metadata cache, the NIC processor 210 sequentially checks whether the metadata is stored in in a first cache-type portion of its local DFS metadata cache (e.g., the cache 240 of FIG. 5) of the NIC processor 210, a second cache-type portion of its local DFS metadata cache (e.g., the cache 250 of FIG. 5) of a NIC (e.g., the NIC 230 of FIG. 5), a memory-type portion of its local DFS metadata cache (e.g., the NIC memory 220 of FIG. 5), or a memory expander portion of its local DFS metadata cache (e.g., the CXL memory expander 300 of FIG. 5). Depending on implementation or configuration, the local DFS metadata cache may include any combination of one or more of these types of local memory, and cache-checking may proceed accordingly.

The NIC 230 may be a CXL-NIC that supports CXL.cache defined in a CXL protocol. The memory expander 300 may be a CXL memory expander that supports CXL.mem defined in the CXL protocol. The computational NIC 200 may be a device of type 1, type 2, or type 3 as defined in the CXL protocol. Moreover, metadata functionality of a computational CXL NIC may be implemented as a core subsystem executing thereon (e.g., an agent, a controller, a driver, etc.). In the case of a computational CXL NIC with .cache functionality, local cache-type portion(s) of the local DFS metadata cache may be accessed using the .cache functionality. In the case of a computation CXL NIC with .mem functionality, a portion of the location DFS metadata cache in a CXL Memory Expander may be accessed through the .mem functionality.

Referring to FIG. 11, in operation 1110, the NIC processor 210 may receive a request for a work permission for metadata. The work permission may refer to a permission to perform reading on the metadata or a permission to perform writing on the metadata. In response to the request, the NIC processor 210 may verify it has permission (e.g., a security token) corresponding to the requested work permission. If it does, then the operations of FIG. 11 may proceed. If it does not, then it may request the work permission from a metadata server 20. If the work permission request is granted by the metadata server 20, then the operations of FIG. 11 may proceed. I f the work permission is not granted by the metadata server 20, then the request (in operation 1110) for work permission may fail.

In operation 1115, the NIC processor 210 may check whether the requested metadata is stored (e.g., cached) in the cache 240 of the NIC processor 210. In operation 1120, when the requested metadata is stored (e.g., cached) in the cache 240 of the NIC processor 210, the NIC processor 210 may verify whether the stored data (e.g., the cached data) is valid. The NIC processor 210 may verify a validity period (or flag) of the stored metadata. When the requested metadata is not stored in the cache 240 of the NIC processor 210 or the stored metadata is invalid, the NIC processor 210 may check a next storage space. When the requested metadata stored (e.g., cached) in the cache 240 of the NIC processor 210 is valid, the NIC processor 210 may provide a permission-granting response to the electronic device 100 (e.g., a client device) through a CXL interface.

In operation 1125, the NIC processor 210 may check whether the requested metadata is stored (e.g., cached) in the cache 250 of the NIC 230. In operation 1130, when the requested metadata is stored (e.g., cached) in the cache 250 of the NIC 230, the NIC processor 210 may verify whether the stored metadata (e.g., the cached metadata) is valid. When the requested metadata is not stored in the cache 250 of the NIC 230 or the stored metadata is invalid, the NIC processor 210 may check a next storage space.

In operation 1135, the NIC processor 210 may check whether the requested metadata is stored (e.g., cached) in the NIC memory 220. In operation 1140, when the requested metadata is stored (e.g., cached) in the NIC memory 220, the NIC processor 210 may verify whether the stored data (e.g., the cached data) is valid. When the requested metadata is not stored in the NIC memory 220 or the stored metadata is invalid, the NIC processor 210 may check a next storage space.

In operation 1145, the NIC processor 210 may check whether the requested metadata is stored (e.g., cached) in the memory expander 300. In operation 1150, when the requested metadata is stored (e.g., cached) in the memory expander 300, the NIC processor 210 may verify whether the stored data (e.g., the cached data) is valid.

In operation 1155, when the requested metadata is not stored in the memory expander 300 or the stored metadata is invalid, the NIC processor 210 may request a metadata server for the appropriate management permission for the requested metadata.

The locally-cached metadata may be managed by a low-power CPU (e.g., the NIC processor 210) included in the computational NIC 200. To reduce latency (e.g., latency that may be caused by access to the metadata server) with only a small cost, the NIC processor 210 may be configured to perform only an operation of managing metadata.

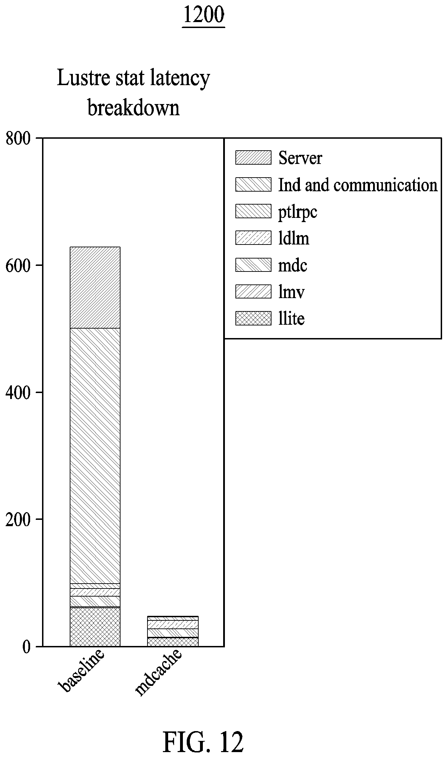

FIG. 12 illustrates a result 1200 of a latent time-related simulation performed in a distributed file system.

An electronic device (e.g., the electronic device 100 of FIG. 2) may use locally cached metadata. Using the locally cached metadata, the electronic device 100 may reduce a latency time in a distributed file system. The electronic device 100 may shorten a network path for access to the metadata in the distributed file system and reduce processing load of a metadata server. To verify the effect that may be achieved by using the stored metadata (e.g., the cached metadata), metadata easy read was performed on IO-500 Mdtest.

**Table 1**

| | baseline | mdcache |
|---|---|---|
| Ilite | 61 | 14 |
| Imv | 2 | 2 |
| mdc | 17 | 12 |
| ldlm | 12 | 13 |
| ptIrpc | 8 | 0 |
| Ind and communication | 401 | 6 |
| server | 129 | 1 |

Referring to FIG. 12 and Table 1, a latency time of a device (indicated as baseline) that does not use locally cached metadata may be 630 milliseconds (ms) in total. In contrast, a latency time of a device (indicated as mdcache) (e.g., the electronic device 100) using locally cached metadata may be 48 ms in total. As verified above, the latency time of the device (mdcache) that uses locally cached metadata may be reduced to 1/13 of the latency time of the device (baseline) that does not use locally cached metadata.

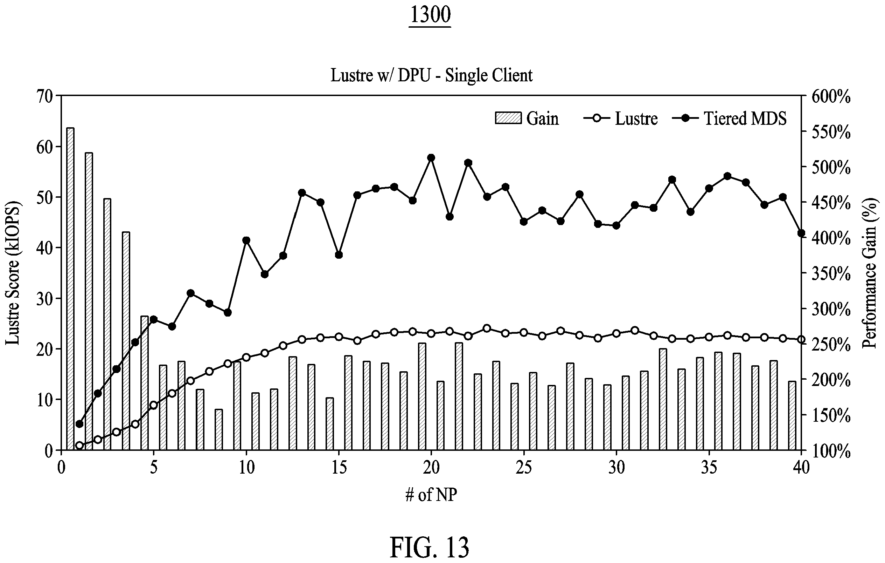

FIG. 13 illustrates a graph 1300 showing performance of distributed file systems for a single client.

Referring to FIG. 13, illustrated is a result obtained by performing mdtest-easy-read benchmark, for a system (Tiered MDS(metadata service)) including a plurality of systems (e.g., a typical system (e.g., Lustre)) and an electronic device (e.g., the electronic device 100 of FIG. 2)), in a single client environment.

In the graph 1300, the x-axis indicates the number of processes performed in the system, the y-axis on the left side indicates kilo input/output operations per second (KIOPS) which are scores (e.g., operation processing speed) of a distributed system, and a broken line graph (Lustre, Tiered MDS) indicates a KIOPS score for each system. In the graph 1300, the y-axis on the right side indicates a degree of performance improvement, and a bar graph (Gain) indicates a degree of performance improvement of the system (Tiered MDS) including the electronic device 100 compared to the typical system (Lustre).

When a small number of processes are performed, the system (Tiered MDS) including the electronic device 100 may have higher performance than the typical system (Lustre). When 1 to 40 processes are performed, the performance improvement of the system (Tiered MDS) compared to the typical system (Lustre) may be approximately 242% on average.

The computing apparatuses, the servers, the clients, the electronic devices, the processors, the memories, the NICs, the storage devices, and other apparatuses, devices, units, modules, and components described herein with respect to FIGS. 1-13 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-13 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components.

Therefore, in addition to the above disclosure, the scope of the invention is defined by the enclosed claims.

## Claims

1. A computational network interface card, NIC, sharing a storage space with a memory expander (300) thereof, the memory expander (300) being a CXL memory expander that supports CXL.mem as defined in a CXL protocol, the computational NIC (200) comprising:
a NIC memory (220) comprising instructions;
a NIC processor (210) comprising a cache (240) and electrically connected to the NIC memory (220); and
a NIC (230) configured to transmit data stored in the NIC memory (220) or the cache (240) to a network,
wherein, the instructions are configured to cause the NIC processor (210) to perform operations comprising:
receiving (1010) a request to read or write metadata, wherein the metadata is used in a distributed file system and a client device (100) comprising the computational NIC (200) participates in the distributed file system;
checking (1020) whether the requested metadata is stored in a local metadata cache of the computational NIC (200) by sequentially checking whether the metadata is stored in the cache (240) of the NIC processor (210), a cache (250) of the NIC, the NIC memory (220), or the memory expander (300); and
when the requested metadata is determined to be stored in the local metadata cache, verifying validity of the cached metadata; or
when the requested metadata is determined to not be stored in the local metadata cache, requesting a metadata server (20) for a metadata management permission of the requested metadata.

2. The computational NIC of claim 1, wherein the NIC (230) is a compute express link, CXL,-NIC that supports CXL.cache as defined in a CXL protocol.

3. The computational NIC of claim 1, wherein the computational NIC (200) is type 1, type 2, or type 3 device as defined in a CXL protocol.

4. The computational NIC of one of claims 1 to 3, wherein the NIC (230) and the NIC processor (210) are connected in series, and a client device comprising the computational NIC (200) accesses the metadata via the NIC processor (210).

5. The computational NIC of one of claims 1 to 3, wherein the NIC (230) and the NIC processor (210) are connected in parallel, and a client device comprising the computational NIC (200) accesses the metadata without passing through the NIC processor (210).

6. The computational NIC of one of claims 1 to 5, wherein the verifying of the validity comprises:
verifying a validity period of the stored metadata; and
verifying whether the computational NIC (200) holds a permission corresponding to the metadata work permission.

7. A computer-readable storage medium storing instructions that, when executed by a processor (100) and/or a computational network interface card, NIC (200), of an electronic device (100) comprising the processor (110) and the computational NIC (200), cause the processor (110) and/or the computational NIC (200) to perform operations, wherein the computational NIC (200) is configured to manage distributed file system, DFS, metadata work permissions for DFS metadata in a local DFS metadata cache of the computational NIC (200), wherein the DFS metadata is metadata for a DFS, and wherein the operations comprise:
requesting (910), to the computational NIC (200), by the processor (110), metadata work permission for a piece of DFS metadata required by a first process executing on the processor (110);
based on determining that the computational NIC (200) does not have metadata management permission for the piece of DFS metadata, requesting (920), by the computational NIC (200), to a metadata server (20) of the DFS, metadata management permission for the piece of DFS metadata; and
obtaining (930), by the computational NIC (200), from the metadata server (20), metadata management permission for the piece of DFS metadata, and based thereon, assigning metadata work permission to the first process.

8. The computer-readable storage medium of claim 7, wherein the metadata work permission is a metadata read permission or a metadata write permission, and the metadata management permission from the metadata server (20) grants permission to assign DFS metadata read permission or write permission to the process executed by the processor (110), or
wherein the metadata server (20) is configured to manage the metadata work permission for all metadata of at least a portion of the DFS, and the computational NIC (200) is configured to be entrusted, by the metadata server (20), with metadata management permission for at least some of the DFS metadata in the local DFS metadata cache, or
further comprising instructions to cause the computational NIC (200) to based on obtained metadata management permission, assign the metadata read permission to both the first process and a second process executing on the processor (110).

9. The computer-readable storage medium of claim 7 or 8, when another electronic device different from the electronic device obtains the metadata write permission for the piece of DFS metadata, the metadata work permission for the piece of DFS metadata is surrendered by the electronic device.

10. The computer-readable storage medium of one of claims 7 to 9, wherein the computational NIC (200) comprises:
a NIC memory (220) comprising instructions;
a NIC processor (210) comprising a cache (240) and electrically connected to the NIC memory (220); and
a NIC (230) configured to transmit data stored in the NIC memory (220) or the cache (240) to a network connected to the NIC (230).

11. A method of operating a memory expander supporting CXL.mem as defined in a compute express link, CXL, protocol, wherein the memory expander (300) comprises a memory device (310) in which pieces of distributed file system, DFS, metadata of a DFS are stored, and a controller (320) configured to control the memory device (310), wherein the method comprises:
receiving, by the controller (320), a work request for an operation on one of the pieces of metadata from an electronic device (100) comprising a computational network interface card, NIC (200) that comprises a NIC memory (220) supporting CXL.mem as defined in the CXL protocol, the computational NIC (200) assigning to a process executed by the electronic device (100), a metadata work permission to work on a piece of DFS metadata in a local DFS metadata cache of the computational NIC (200), the computational NIC (200) connected with the memory expander (300); and
in response to the work request, performing, by the controller (320), at least one operation on one of the pieces of DFS metadata stored in the memory device.

12. The method of claim 11 further comprising communicating directly with the computational NIC (200) or the electronic device (100) through a CXL interface.

13. The method of claim 11 or 12, wherein the computational NIC (200) is a type 2 or type 3 device as defined in the CXL protocol, or
further comprising receiving, from the electronic device (100), a metadata read request for reading the one of the pieces of DFS metadata; and in response to the metadata read request, transmitting the one of the pieces of DFS metadata to the electronic device, or
further comprising receiving, from the electronic device (100), a metadata write request for writing the one of the pieces of DFS metadata and associated result data; and in response to the metadata write request, changing the one of the pieces of DFS metadata to the result data and store the result data, or
wherein the pieces of DFS metadata are metadata used for accessing file system objects in a distributed file system.

## Patentansprüche

1. Computergestützte Netzwerkschnittstellenkarte, (network interface card) NIC, die sich einen Speicherbereich mit einem Speicherexpander (300) davon teilt, wobei der Speicherexpander (300) ein CXL-Speicherexpander ist, der CXL.mem, wie in einem CXL-Protokoll definiert, unterstützt, wobei die computergestützte NIC (200) umfasst:
einen NIC-Speicher (220) umfassend Instruktionen;
einen NIC-Prozessor (210) umfassend einen Cache (240) und elektrisch verbunden mit dem NIC-Speicher (220); und
einen NIC (230) konfiguriert zum Übertragen von in dem NIC-Speicher (220) oder dem Cache (240) gespeicherten Daten an ein Netzwerk,
wobei die Anweisungen konfiguriert sind, um den NIC-Prozessor (210) zu veranlassen, Operationen durchzuführen, umfassend:
Empfangen (1010) einer Anforderung zum Lesen oder Schreiben von Metadaten, wobei die Metadaten in einem verteilten Dateisystem verwendet werden und ein Client-Gerät (100), das die computergestützte NIC (200) umfasst, an dem verteilten Dateisystem teilnimmt;
Prüfen (1020), ob die angeforderten Metadaten in einem lokalen Metadaten-Cache der computergestützten NIC (200) gespeichert sind, durch sequentielles Prüfen, ob die Metadaten in dem Cache (240) des NIC-Prozessors (210), einem Cache (250) der NIC, dem NIC-Speicher (220) oder dem Speicherexpander (300) gespeichert sind; und
wenn festgestellt wird, dass die angeforderten Metadaten in dem lokalen Metadaten-Cache gespeichert sind, Überprüfen der Gültigkeit der im Cache gespeicherten Metadaten; oder
wenn festgestellt wird, dass die angeforderten Metadaten nicht in dem lokalen Metadaten-Cache gespeichert sind, Anfordern einer Metadaten-Verwaltungsberechtigung für die angeforderten Metadaten von einem Metadatenserver (20).

2. Computergestützte NIC nach Anspruch 1, wobei die NIC (230) eine Compute-Express-Link-, CXL-NIC ist, die CXL.cache unterstützt, wie in einem CXL-Protokoll definiert.

3. Computergestützte NIC nach Anspruch 1, wobei die computergestützte NIC (200) ein Gerät vom Typ 1, Typ 2 oder Typ 3 ist, wie in einem CXL-Protokoll definiert.

4. Computergestützte NIC nach einem der Ansprüche 1 bis 3, wobei die NIC (230) und der NIC-Prozessor (210) in Reihe geschaltet sind und ein Client-Gerät, das die computergestützte NIC (200) umfasst, über den NIC-Prozessor (210) auf die Metadaten zugreift.

5. Computergestützte NIC nach einem der Ansprüche 1 bis 3, wobei die NIC (230) und der NIC-Prozessor (210) parallelgeschaltet sind und ein Client-Gerät, das die computergestützte NIC (200) umfasst, auf die Metadaten zugreift, ohne den NIC-Prozessor (210) zu passieren.

6. Computergestützte NIC nach einem der Ansprüche 1 bis 5, wobei das Überprüfen der Gültigkeit umfasst:
Überprüfen einer Gültigkeitsdauer der gespeicherten Metadaten; und
Überprüfen, ob die computergestützte NIC (200) eine Berechtigung besitzt, die der Metadaten-Arbeitsberechtigung entspricht.

7. Computerlesbares Speichermedium, das Instruktionen speichert, die, wenn sie von einem Prozessor (100) und/oder einer computergestützten Netzwerkschnittstellenkarte, NIC (200), eines elektronischen Geräts (100), die den Prozessor (110) und die computergestützte NIC (200) umfasst, ausgeführt werden, den Prozessor (110) und/oder die computergestützte NIC (200) veranlassen, Operationen durchzuführen, wobei die computergestützte NIC (200) konfiguriert ist, zum Verwalten von verteilten Dateisystem-, DFS-, Metadaten-Arbeitsberechtigungen für DFS-Metadaten in einem lokalen DFS-Metadaten-Cache der computergestützten NIC (200), wobei die DFS-Metadaten Metadaten für ein DFS sind, und wobei die Operationen Folgendes umfassen:
Anfordern (910) einer Metadaten-Arbeitsberechtigung für einen Teil von DFS-Metadaten, die von einem ersten Prozess, der auf dem Prozessor (110) ausgeführt wird, benötigt werden, durch den Prozessor (110) an die computergestützte NIC (200);
basierend auf der Feststellung, dass die computergestützte NIC (200) keine Metadaten-Verwaltungsberechtigung für den Teil der DFS-Metadaten hat, Anfordern (920) einer Metadaten-Verwaltungsberechtigung für den Teil der DFS-Metadaten durch die computergestützte NIC (200) bei einem Metadatenserver (20) des DFS; und
Erhalten (930) einer Metadaten-Verwaltungsberechtigung für den Teil der DFS-Metadaten durch die computergestützte NIC (200) von dem Metadatenserver (20) und basierend darauf, Zuweisen einer Metadaten-Arbeitsberechtigung an den ersten Prozess.

8. Computerlesbares Speichermedium nach Anspruch 7, wobei die Metadaten-Arbeitsberechtigung eine Metadaten-Leseberechtigung oder eine Metadaten-Schreibberechtigung ist, und die Metadaten-Verwaltungsberechtigung von dem Metadatenserver (20) eine Berechtigung erteilt, um dem von dem Prozessor (110) ausgeführten Prozess eine DFS-Metadaten-Leseberechtigung oder eine Schreibberechtigung zuzuweisen, oder
wobei der Metadatenserver (20) konfiguriert ist, um die Metadaten-Arbeitsberechtigung für alle Metadaten von mindestens einem Teil des DFS zu verwalten, und wobei die computergestützte NIC (200) konfiguriert ist, um von dem Metadatenserver (20) mit der Metadaten-Verwaltungsberechtigung für mindestens einige der DFS-Metadaten in dem lokalen DFS-Metadaten-Cache betraut zu werden, oder
ferner umfassend Anweisungen, um die computergestützte NIC (200) zu veranlassen, basierend auf der erhaltenen Metadaten-Verwaltungsberechtigung, die Metadaten-Leseberechtigung sowohl dem ersten Prozess als auch einem zweiten Prozess, der auf dem Prozessor (110) ausgeführt wird, zuzuweisen.

9. Computerlesbares Speichermedium nach Anspruch 7 oder 8, wobei, wenn ein anderes elektronisches Gerät, das sich von dem elektronischen Gerät unterscheidet, die Metadaten-Schreibberechtigung für den Teil der DFS-Metadaten erhält, die Metadaten-Arbeitsberechtigung für den Teil der DFS-Metadaten von dem elektronischen Gerät zurückgegeben wird.

10. Computerlesbares Speichermedium nach einem der Ansprüche 7 bis 9, wobei die computergestützte NIC (200) umfasst:
einen NIC-Speicher (220) umfassend Instruktionen;
einen NIC-Prozessor (210) umfassend einen Cache (240) und elektrisch verbunden mit dem NIC-Speicher (220); und
eine NIC (230) konfiguriert zum Übertragen von in dem NIC-Speicher (220) oder dem Cache (240) gespeicherten Daten an ein mit der NIC (230) verbundenes Netzwerk.

11. Verfahren zum Betreiben eines Speicherexpanders, der CXL.mem unterstützt, wie es in einem Compute-Express-Link-, CXL-Protokoll definiert ist, wobei der Speicherexpander (300) ein Speichergerät (310), in dem Teile von verteilten Dateisystem-, DFS-, Metadaten eines DFS gespeichert sind, und einen Controller (320) umfasst, der konfiguriert ist, zum Steuern des Speichergeräts (310), wobei das Verfahren umfasst:
Empfangen, durch den Controller (320), einer Arbeitsanforderung für eine Operation an einem von den Teilen von Metadaten von einem elektronischen Gerät (100), das eine computergestützte Netzwerkschnittstellenkarte, NIC (200), umfasst, die einen NIC-Speicher (220) umfasst, der CXL.mem unterstützt, wie im CXL-Protokoll definiert, wobei die computergestützte NIC (200) einem von dem elektronischen Gerät (100) ausgeführten Prozess eine Metadaten-Arbeitsberechtigung zuweist, um an einem Teil von DFS-Metadaten in einem lokalen DFS-Metadaten-Cache der computergestützten NIC (200) zu arbeiten, wobei die computergestützte NIC (200) mit dem Speicherexpander (300) verbunden ist; und
in Reaktion auf die Arbeitsanforderung, Durchführen mindestens einer Operation an einem der in der Speichervorrichtung gespeicherten Teile von DFS-Metadaten durch den Controller (320).

12. Verfahren nach Anspruch 11, ferner umfassend direkte Kommunikation mit der computergestützten NIC (200) oder dem elektronischen Gerät (100) über eine CXL-Schnittstelle.

13. Verfahren nach Anspruch 11 oder 12, wobei die computergestützte NIC (200) ein Gerät des Typs 2 oder des Typs 3 ist, wie im CXL-Protokoll definiert, oder
ferner umfassend das Empfangen einer Metadaten-Leseanforderung von dem elektronischen Gerät (100) zum Lesen des einen Teils der DFS-Metadaten; und in Reaktion auf die Metadaten-Leseanforderung, das Übertragen des einen Teils der DFS-Metadaten an das elektronische Gerät, oder
ferner umfassend das Empfangen einer Metadaten-Schreibanforderung von dem elektronischen Gerät (100) zum Schreiben des einen Teils der DFS-Metadaten und verknüpfter Ergebnisdaten; und in Reaktion auf die Metadaten-Schreibanforderung, das Ändern des einen Teils der DFS-Metadaten in die Ergebnisdaten und Speichern der Ergebnisdaten, oder
wobei die Teile der DFS-Metadaten Metadaten sind, die für den Zugriff auf Dateisystemobjekte in einem verteilten Dateisystem verwendet werden.

## Revendications

1. Carte d'interface réseau, NIC, informatique partageant un espace de stockage avec un extenseur de mémoire (300) de celle-ci, l'extenseur de mémoire (300) étant un extenseur de mémoire CXL qui prend en charge CXL.mem comme défini dans un protocole CXL, la NIC informatique (200) comprenant :
une mémoire de NIC (220) comprenant des instructions ;
un processeur de NIC (210) comprenant un cache (240) et connecté électriquement à la mémoire de NIC (220) ; et
une NIC (230) configurée pour transmettre des données stockées dans la mémoire de NIC (220) ou le cache (240) à un réseau,
dans laquelle les instructions sont configurées pour amener le processeur de NIC (210) à réaliser des opérations comprenant :
la réception (1010) d'une demande de lecture ou d'écriture de métadonnées, où les métadonnées sont utilisées dans un système de fichiers distribués et un dispositif client (100) comprenant la NIC informatique (200) participe au système de fichiers distribués ;
le contrôle (1020) consistant à savoir si les métadonnées demandées sont stockées dans un cache de métadonnées local de la NIC informatique (200) en contrôlant séquentiellement si les métadonnées sont stockées dans le cache (240) du processeur de NIC (210), un cache (250) de la NIC, la mémoire de NIC (220) ou l'extenseur de mémoire (300) ; et
lorsque les métadonnées demandées sont déterminées comme étant stockées dans le cache de métadonnées local, la vérification de la validité des métadonnées mises en cache ; ou
lorsque les métadonnées demandées sont déterminées comme n'étant pas stockées dans le cache de métadonnées local, la demande à un serveur de métadonnées (20) d'une autorisation de gestion de métadonnées des métadonnées demandées.

2. NIC informatique de la revendication 1, dans laquelle la NIC (230) est une NIC de liaison express de calcul, CXL, qui prend en charge CXL.cache comme défini dans un protocole CXL.

3. NIC informatique de la revendication 1, dans laquelle la NIC informatique (200) est un dispositif de type 1, de type 2 ou de type 3 comme défini dans un protocole CXL.

4. NIC informatique de l'une des revendications 1 à 3, dans laquelle la NIC (230) et le processeur de NIC (210) sont connectés en série, et un dispositif client comprenant la NIC informatique (200) accède aux métadonnées via le processeur de NIC (210).

5. NIC informatique de l'une des revendications 1 à 3, dans laquelle la NIC (230) et le processeur de NIC (210) sont connectés en parallèle, et un dispositif client comprenant la NIC informatique (200) accède aux métadonnées sans passer par le processeur de NIC (210).

6. NIC informatique de l'une des revendications 1 à 5, dans laquelle la vérification de la validité comprend :
la vérification d'une période de validité des métadonnées stockées ; et
la vérification consistant à savoir si la NIC informatique (200) détient une autorisation correspondant à l'autorisation de travail de métadonnées.

7. Support de stockage lisible par ordinateur stockant des instructions qui, lorsqu'elles sont exécutées par un processeur (100) et/ou une carte d'interface réseau, NIC, informatique (200) d'un dispositif électronique (100) comprenant le processeur (110) et la NIC informatique (200), amènent le processeur (110) et/ou la NIC informatique (200) à réaliser des opérations, dans lequel la NIC informatique (200) est configurée pour gérer des autorisations de travail de métadonnées de système de fichiers distribués, DFS, pour des métadonnées DFS dans un cache de métadonnées DFS local de la NIC informatique (200), dans lequel les métadonnées DFS sont des métadonnées pour un DFS, et dans lequel les opérations comprennent :
la demande (910), à la NIC informatique (200), par le processeur (110), d'une autorisation de travail de métadonnées pour un élément de métadonnées DFS requis par un premier processus s'exécutant sur le processeur (110) ;
sur la base de la détermination que la NIC informatique (200) ne dispose pas de l'autorisation de gestion de métadonnées pour l'élément de métadonnées DFS, la demande (920), par la NIC informatique (200), à un serveur de métadonnées (20) du DFS, de l'autorisation de gestion de métadonnées pour l'élément de métadonnées DFS ; et
l'obtention (930), par la NIC informatique (200), auprès du serveur de métadonnées (20), de l'autorisation de gestion de métadonnées pour l'élément de métadonnées DFS, et sur la base de cela, l'attribution de l'autorisation de travail de métadonnées au premier processus.

8. Support de stockage lisible par ordinateur de la revendication 7, dans lequel l'autorisation de travail de métadonnées est une autorisation de lecture de métadonnées ou une autorisation d'écriture de métadonnées, et l'autorisation de gestion de métadonnées provenant du serveur de métadonnées (20) accorde l'autorisation d'attribuer une autorisation de lecture de métadonnées DFS ou une autorisation d'écriture au processus exécuté par le processeur (110), ou
dans lequel le serveur de métadonnées (20) est configuré pour gérer l'autorisation de travail de métadonnées pour toutes les métadonnées d'au moins une partie du DFS, et la NIC informatique (200) est configurée pour se voir confier, par le serveur de métadonnées (20), une autorisation de gestion de métadonnées pour au moins certaines des métadonnées DFS dans le cache de métadonnées DFS local, ou
comprenant en outre des instructions pour amener la NIC informatique (200) à attribuer, sur la base de l'autorisation de gestion de métadonnées obtenue, l'autorisation de lecture de métadonnées à la fois au premier processus et à un second processus s'exécutant sur le processeur (110).

9. Support de stockage lisible par ordinateur de la revendication 7 ou 8, dans lequel, lorsqu'un autre dispositif électronique différent du dispositif électronique obtient l'autorisation d'écriture de métadonnées pour l'élément de métadonnées DFS, l'autorisation de travail de métadonnées pour l'élément de métadonnées DFS est abandonnée par le dispositif électronique.

10. Support de stockage lisible par ordinateur de l'une des revendications 7 à 9, dans lequel la NIC informatique (200) comprend :
une mémoire de NIC (220) comprenant des instructions ;
un processeur de NIC (210) comprenant un cache (240) et connecté électriquement à la mémoire de NIC (220) ; et
une NIC (230) configurée pour transmettre des données stockées dans la mémoire de NIC (220) ou le cache (240) à un réseau connecté à la NIC (230).

11. Procédé de fonctionnement d'un extenseur de mémoire prenant en charge CXL.mem comme défini dans un protocole de liaison express de calcul, CXL, dans lequel l'extenseur de mémoire (300) comprend un dispositif de mémoire (310) dans lequel des éléments de métadonnées de système de fichiers distribués (DFS) d'un DFS sont stockés, et une unité de commande (320) configurée pour commander le dispositif de mémoire (310), dans lequel le procédé comprend :
la réception, par l'unité de commande (320), d'une demande de travail pour une opération sur l'un des éléments de métadonnées à partir d'un dispositif électronique (100) comprenant une carte d'interface réseau, NIC, informatique (200) qui comprend une mémoire de NIC (220) prenant en charge CXL.mem comme défini dans le protocole CXL, la NIC informatique (200) attribuant à un processus exécuté par le dispositif électronique (100), une autorisation de travail de métadonnées pour travailler sur un élément de métadonnées DFS dans un cache de métadonnées DFS local de la NIC informatique (200), la NIC informatique (200) étant connectée à l'extenseur de mémoire (300) ; et
en réponse à la demande de travail, la réalisation, par l'unité de commande (320), d'au moins une opération sur l'un des éléments de métadonnées DFS stockés dans le dispositif de mémoire.

12. Procédé de la revendication 11, comprenant en outre la communication directe avec la NIC informatique (200) ou le dispositif électronique (100) par l'intermédiaire d'une interface CXL.

13. Procédé de la revendication 11 ou 12, dans lequel la NIC informatique (200) est un dispositif de type 2 ou de type 3 comme défini dans le protocole CXL, ou
comprenant en outre la réception, depuis le dispositif électronique (100), d'une demande de lecture de métadonnées pour lire l'un des éléments de métadonnées DFS ; et en réponse à la demande de lecture de métadonnées, la transmission de l'un des éléments de métadonnées DFS au dispositif électronique, ou
comprenant en outre la réception, depuis le dispositif électronique (100), d'une demande d'écriture de métadonnées pour écrire l'un des éléments de métadonnées DFS et des données de résultat associées ; et en réponse à la demande d'écriture de métadonnées, le changement de l'un des éléments de métadonnées DFS en données de résultat et le stockage des données de résultat, ou
dans lequel les éléments de métadonnées DFS sont des métadonnées utilisées pour accéder à des objets de système de fichiers dans un système de fichiers distribués.
